# FASCICULE DE BREVET EUROPEEN

(11) **EP 3 116 783 B1**
(45) Date de publication et mention de la délivrance du brevet: **24.01.2018**
(21) Numéro de dépôt: 15714574.9
(22) Date de dépôt: 05.03.2015
(51) Int. Cl.: B64F 1/305, E04H 15/52

(54) **DISPOSITIF DEPLOYABLE POUR COUVRIR LE CHEMINEMENT DES PASSAGERS ENTRE UN BATIMENT TERMINAL ET UN MOYEN DE TRANSPORT PAR EXEMPLE AERIEN**
EINSETZBARE VORRICHTUNG ZUM ABDECKEN DES WEGES VON PASSAGIEREN ZWISCHEN EINEM ABFERTIGUNGSGEBÄUDE UND EINEM TRANSPORTMITTEL WIE ZUM BEISPIEL EIN LUFTTRANSPORTMITTEL
DEPLOYABLE DEVICE FOR COVERING THE PATH OF PASSENGERS BETWEEN A TERMINAL BUILDING AND A TRANSPORT MEANS, FOR EXAMPLE AN AERIAL TRANSPORT MEANS

(30) Priorité: 13.03.2014 FR 1452090
(43) Date de publication de la demande: 18.01.2017
(73) Titulaire: B. Consulting, 14400 Bayeux (FR)
(72) Inventeur: POLIDOR, Franck, F-14114 Ver-sur-Mer (FR)
(74) Mandataire: IP Trust
(86) Numéro de dépôt international: PCT/FR2015/050538
(87) Numéro de publication internationale: WO 2015/136191

(56) Documents cités:
- DE-A1- 3 504 513
- FR-A1- 2 667 045
- GB-A- 2 140 479
- JP-A- 2004 203 104
- JP-A- 2005 007 997
- US-A- 5 603 343

## Description

L'invention concerne un dispositif déployable pour couvrir le cheminement des passagers entre un bâtiment terminal et un moyen de transport par exemple aérien.

### Etat de l'art

Il est connu du document FR 2 667 045 un dispositif déployable constitué d'une structure métallique rigide, et d'une enveloppe souple.

Si ce dispositif permet de sécuriser lorsque déployé, les mouvements de passagers entre un terminal d'aéroport et la porte d'accès à un avion, en les isolant notamment des véhicules évoluant sur le tarmac, il présente un encombrement relativement important lorsque replié, en raison des croisillons constitutifs de la structure rigide qui ne se replient pas de façon suffisamment compacte. Egalement, compte tenu des nombreuses articulations présentes dans cette structure rigide, son déploiement et son repliement demandent des efforts de traction relativement importants.

En outre, un tronçon de tunnel de ce type d'une longueur de 2,40 mètres présente un poids d'environ 150 kg avec un centre de gravité relativement élevé, qui vient augmenter le risque de basculement.

Par ailleurs, des documents de l'état de la technique divulguent des dispositifs pour couvrir le cheminement des passagers avec des enveloppes souples dont l'enveloppe est monobloc et couvrent une structure rigide de support (documents GB 2 140 479, JP 2005 007997 et JP2004 203104, US 5 603 343 et FR 2 667 045) ou une enveloppe formée de segments rectangulaires fixés par leurs bords longs à des cadres rigides successifs, et pourvus sur leurs bords courts, de profilés articulés et mobiles entre une position tendue de déploiement de l'enveloppe et une position rétracté en forme de V de repliement de l'enveloppe dans laquelle ces profilés s'interposent entre deux cadres consécutifs (document DE 35 04 513). Ces dispositifs peuvent cependant manquer de stabilité et/ou présenter un encombrement important même dans la configuration contractée.

L'invention a pour but de pallier ces inconvénients en proposant un dispositif compact dans sa configuration contractée, et facile à convertir entre ses configurations déployées et contractées.

A cet effet, l'invention concerne un dispositif déployable pour couvrir le cheminement des passagers entre un bâtiment terminal et un moyen de transport par exemple aérien, comprenant :
- une structure rigide définie par des cadres articulés deux à deux en alternance par un segment commun et par les extrémités inférieures de deux segments latéraux s'étendant à partir d'un segment commun, entre une configuration contractée dans laquelle les cadres sont plaqués les uns contre les autres et une configuration déployée dans laquelle ces cadres font un angle les uns vis-à-vis des autres, et
- une enveloppe souple s'étendant, dans la configuration déployée de la structure, entre les cadres écartés de façon à définir un dôme d'isolement et de protection des passagers, et, dans la configuration contractée de la structure, en dehors de deux cadres consécutifs plaqués l'un sur l'autre.

Plus précisément, ce dispositif comprend :
- une structure rigide définie par
- des segments supérieurs parallèles dont les extrémités sont solidaires de charnières d'articulation supérieures,
- des charnières d'articulation inférieures disposées entre deux charnières d'articulation supérieures adjacentes
- des segments latéraux reliant chacun une charnière supérieure à une charnière inférieure,
la structure étant mobile entre une configuration contractée, dans laquelle les les segments supérieurs sont rabattus les uns contre les autres, et les segments latéraux sont rabattus les uns contre les autres, et une configuration déployée, dans laquelle les segments supérieurs et les segments latéraux se tiennent à une distance maximale les uns des autres.

L'invention peut par ailleurs présenter l'un et/ou l'autre des aspects suivants :
- chaque segment latéral comprend un lest en partie inférieure permettant d'abaisser le centre de gravité du dispositif,
- chaque segment latéral comprend deux portions coudées l'une par rapport à l'autre, la portion reliée à la charnière supérieure définissant avec le segment supérieur un angle obtus minimisant la prise au vent.
- les charnières inférieures sont solidaires de roulements permettant le déplacement de la structure entre la configuration déployée et la configuration contractée,
- le déplacement des roulements est motorisé au niveau d'un ou des segments d'extrémité,
- le dispositif comprend une partie fixe destinée à être solidarisée avec le sol à proximité du bâtiment terminal, une partie de corps sensiblement rectiligne de cheminement des passagers, une extrémité libre susceptible de se courber, et une partie de tête à monter sur une entrée d'un moyen de transport s'étendant perpendiculairement au bâtiment terminal,
- l'extrémité libre du dispositif comprend des moyens de maintien côte à côte d'un certain nombre de segments latéraux de la structure, de part et d'autre de la structure, amoviblement fixés auxdits segments, les moyens gauche de maintien, et les moyens droit de maintien pouvant être utilisés ensemble ou indépendamment l'un de l'autre de façon à permettre à la tête d'adopter une configuration rectiligne, courbée droite ou courbée gauche,
- l'enveloppe souple comprend de petits pans définissant chacun un contour sensiblement triangulaire dont les deux bords latéraux sont respectivement fixés aux segments latéraux issus de la même charnière supérieure, le bord restant constituant un bord libre,
- l'enveloppe souple comprend de grands pans s'étendant entre deux segments supérieurs adjacents, et les deux paires de segments latéraux issues respectivement des deux charnières inférieures correspondantes, les bords latéraux de chaque grand pan étant respectivement fixés aux deux segments supérieures, aux quatre segments latéraux s'étendant à partir de ces segments supérieurs
- chaque grand pan et/ou chaque petit pan est formé d'un morceau de toile par exemple de type bâche PVC, de préférence imperméable, et/ou opaque.

L'invention concerne également un système de dispositifs pour couvrir le cheminement des passagers entre un bâtiment terminal et un moyen de transport par exemple aérien, comprenant :
- un premier dispositif pour couvrir le cheminement des passagers depuis une sortie du bâtiment terminal située d'un côté d'une allée de circulation, jusqu'à l'autre côté de l'allée de circulation
- un deuxième dispositif de cheminement des passagers depuis l'autre côté de l'allée de circulation et l'entrée du moyen de transport, et qui est déployable.

Selon une variante de réalisation avantageuse, le premier dispositif est rigide ou déployable, et mobile dans l'allée de circulation.

Idéalement, le deuxième dispositif est conforme au dispositif déployable décrit précédemment.

L'invention sera maintenant décrite en référence aux figures annexées représentant schématiquement un mode de réalisation de l'invention non limitatif, et parmi lesquelles :
- les figures 1 à 4 représentent respectivement par une vue en perspective, une vue de dessus, une vue de côté et une vue depuis son extrémité libre, le dispositif déployable selon l'invention, en configuration déployée rectiligne, et monté sur un avion au sol,
- les figures 5 et 6 illustrent par une vue de dessus, le dispositif selon l'invention respectivement dans une configuration courbée à gauche vis à vis de la porte d'accès à l'avion, et une configuration courbée à droite,
- la figure 7 est un agrandissement de la figure 3,
- les figures 8 à 10 représentent par une vue de dessus, le dispositif dans une configuration contractée respectivement vu de côté, de dessus, et depuis son extrémité se fixant à l'avion,
- les figures 11 à 13 représentent un motif récurrent de la structure rigide, obtenu par l'assemblage d'un segment supérieur et de quatre segments latéraux, respectivement vu en perspective, de côté, et de dessus suivant un angle perpendiculaire au plan défini par deux segments latéraux opposés et le segment supérieur,
- la figure 14 montre en perspective un module de motorisation de la structure rigide,
- la figure 15, un module d'interface de la structure rigide disposé à chacune de ses extrémités,
- la figure 16 la partie de tête de la structure rigide selon l'invention, permettant la fixation sur la porte d'accès de l'avion,
- les figures 17 et 18 représentent en perspective deux parties principales de l'enveloppe souple du tunnel selon l'invention.

L'invention telle que représentée sur les figures se rapporte à un tunnel déployable et rétractable destiné à s'étendre entre la sortie d'un terminal d'aéroport, et la porte d'accès d'un avion.

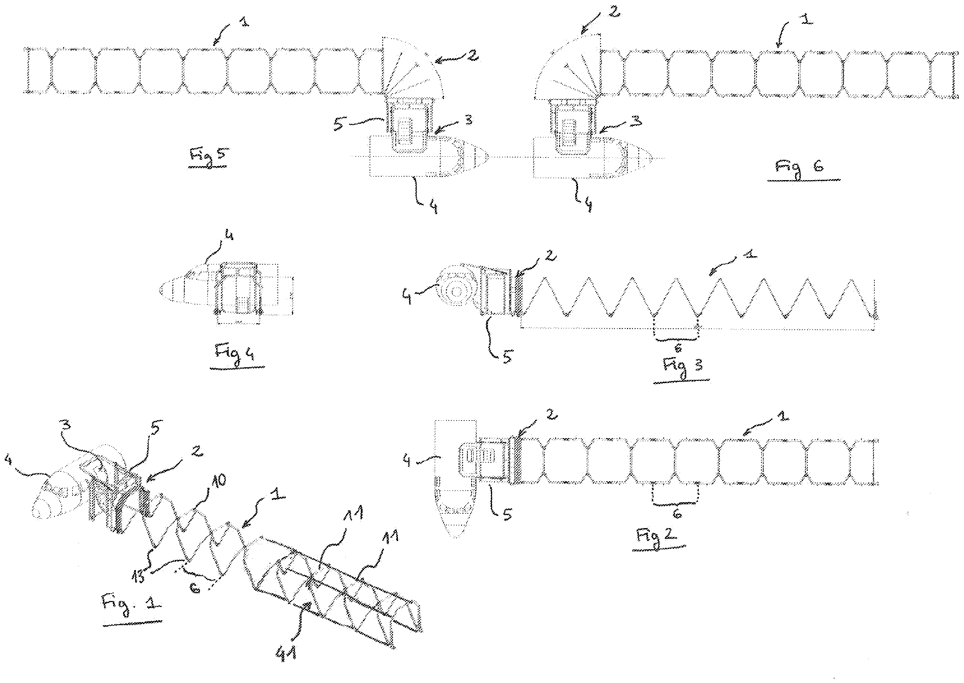

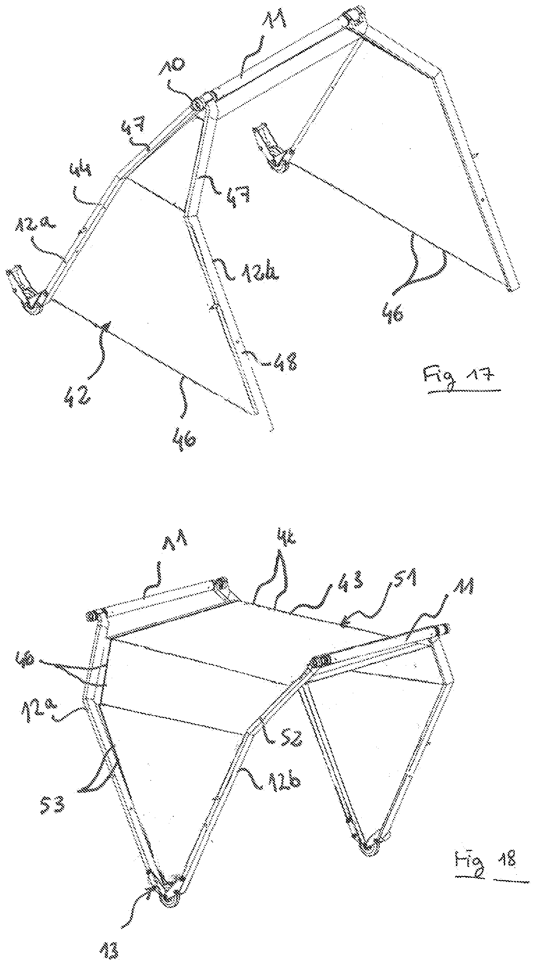

Ainsi, tel que représenté sur les figures 1 à 4, ce tunnel comprend une structure ou armature rigide 1 supportant une toile (non représentée sur ces figures mais sur les figures 17 et 18) formant un dôme le long de la structure rigide.

Le tunnel comprend en outre une extrémité 2 dont la forme peut s'adapter à la position relative entre le terminal et l'avion : lorsque la porte de l'avion fait face à celle du terminal, l'extrémité du tunnel est rectiligne (figures 1 à 4), ou, conformément aux figures 5 et 6, lorsque la porte de l'avion est perpendiculaire à celle du terminal, l'extrémité du tunnel peut adopter une configuration en « C » vu de dessus, gauche ou droite.

Cette extrémité 2 est reliée à une partie de tête 5 du tunnel qui est montée autour de la porte d'accès 3 de l'avion.

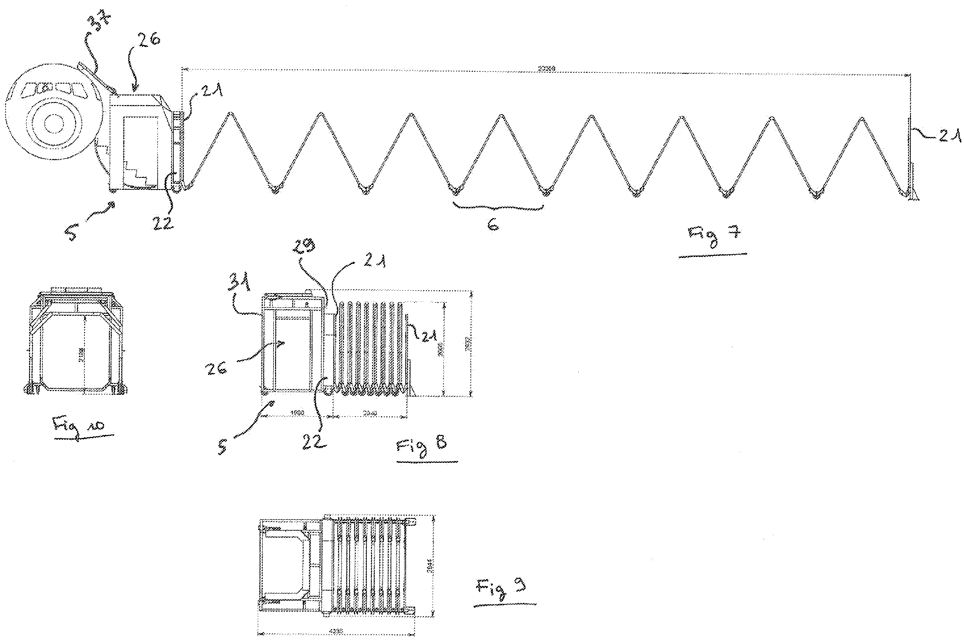

Comme visible par comparaison des figures 7 et 8, le tunnel selon l'invention peut adopter une configuration totalement déployée dans laquelle il peut s'étendre dans une configuration rectiligne, sur plus de 20 mètres (et 22 mètres si l'on compte la partie de tête 5, les dimensions indiquées sur les figures étant en millimètres), et une configuration totalement replié ou contracté, dans laquelle la partie déployable ne s'étend plus que sur 2 mètres (et sur 4 mètres si l'on compte la partie de tête 5).

Cette compacité remarquable dans la configuration repliée, est rendue possible grâce à la structure même du tunnel.

La structure rigide est en fait définie par des cadres en forme de U inversé articulés deux à deux en alternance par un segment commun 11 et par les extrémités 13 de leurs segments latéraux 12a, 12b s'étendant à partir d'un segment commun, entre une configuration contractée dans laquelle les cadres sont plaqués les uns contre les autres et une configuration déployée dans laquelle ces cadres font un angle les uns vis-à-vis des autres.

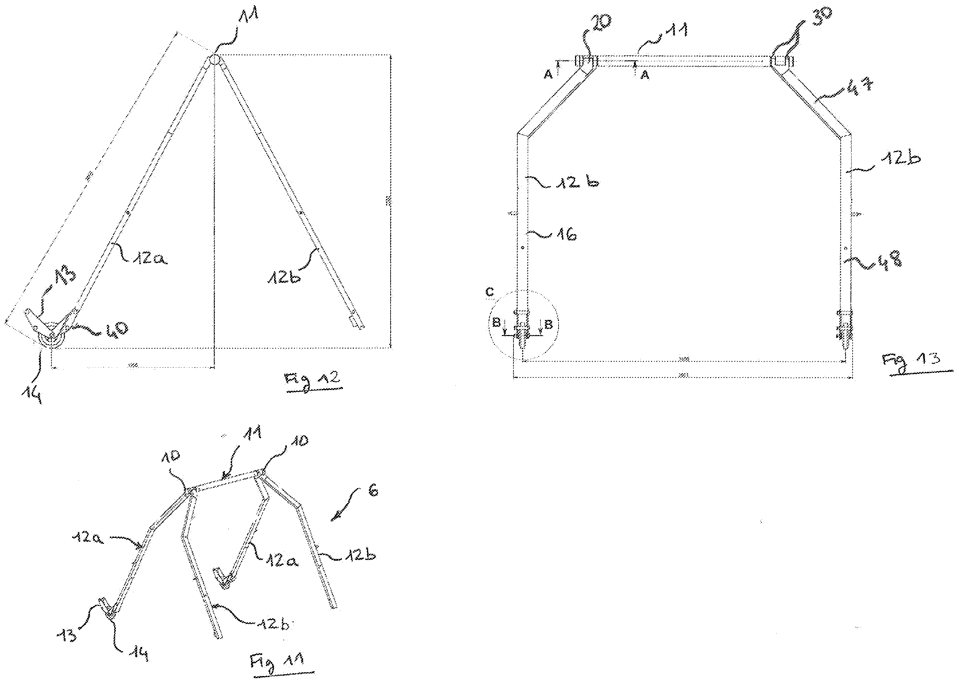

Elle est en effet conçue comme une répétition d'un même « motif » constitué par l'assemblage de segments, tels que mis en évidence sur la figure 11, comprenant un segment supérieur 11 dont les deux extrémités opposées servent chacune d'articulation aux extrémités supérieures de deux segments latéraux 12a, 12b, l'extrémité inférieure de chaque segment latéral 12a, 12b aboutit à une articulation 13 à l'extrémité inférieure du segment latéral 12 du motif adjacent, articulation 13 portée par un roulement 14.

Ainsi, comme visible sur la figure 1, la partie déployable du tunnel comprend une succession de huit motifs de ce type définissant autant de segments supérieurs parallèles 11, des charnières d'articulation supérieures 10 à chaque extrémité de ces segments supérieurs 11, deux segments latéraux 12 partant de chaque charnière supérieure 10, et des charnières d'articulation inférieures 13, chacune commune aux extrémités inférieures de deux segments latéraux adjacents 12a, 12b de deux motifs successifs 6 et montée chacune sur un roulement 14.

Vus de côté (figure 12), les segments latéraux 12a, 12b d'un motif 6 présentent un profil rectiligne et sensiblement plat, qui permet leur venue à plat l'un sur l'autre lorsque la structure adopte sa configuration contractée, et définissent au contraire l'un et l'autre un angle d'environ 60° dans la configuration déployée. Ils présentent vus de face, un profil coudé (figure 13) dont la portion inférieure 16 s'étend sensiblement perpendiculairement au segment supérieur 11 et dont la portion supérieure 17 forme un angle obtus par exemple de environ 135° avec ce segment supérieur 11, et la portion inférieure 16, afin de diminuer la prise au vent de la structure, qui aurait été maximale avec un angle droit.

Chaque segment supérieur et latéral est constitué par un profilé à section rectangulaire plate (moins de 3 centimètres) en métal, tel que de l'aluminium ou de l'acier.

Comme visible sur la figure 13, l'articulation supérieure 10 d'un segment latéral 12a au segment supérieur est formée par une extrémité de ce segment se terminant en forme de manchon 20 qui est monté autour d'un tronçon du segment supérieur 11 de moindre diamètre. L'extrémité supérieure de l'autre segment latéral 12b articulé à ce même segment supérieur 11 se termine en forme de chape 30 dont les deux branches opposées sont disposées de part et d'autre du manchon 20.

Ces articulations particulières s'emboitant l'une l'autre, et la section aplatie des segments latéraux permettent un repliement de ces segments plaqués l'un contre l'autre.

Comme visible sur la figure 12, l'articulation inférieure 13 d'un segment latéral 12a au segment latéral adjacent 12b, est obtenue par deux paires de flasques de forme triangulaire, les deux flasques d'une même paire étant disposés de part et d'autre du roulement 14 et comprennent chacun un sommet relié par une liaison pivot à l'axe de rotation du roulement concerné 14, les deux autres sommets étant fixés le long du segment latéral correspondant, les deux paires de flasques étant montées respectivement sur les deux extrémités inférieures des deux segments latéraux et ont en commun leur articulation à l'axe de rotation du roulement 41.

Ainsi, lorsque ce « motif » est replié, les deux segments latéraux 12a, 12b disposés de part et d'autre du segment supérieur 11 viennent se plaquer l'un contre l'autre et se retrouvent disposés suivant un plan vertical, sous la charnière supérieure correspondante 10, adoptant une configuration extrêmement compacte.

Et comme visible sur les figures 8 et 9, deux motifs successifs repliés 6 sont espacés deux à deux d'une distance également très faible de l'ordre de dix centimètres, représentant l'écart minimal défini par les deux paires de flasques précitées

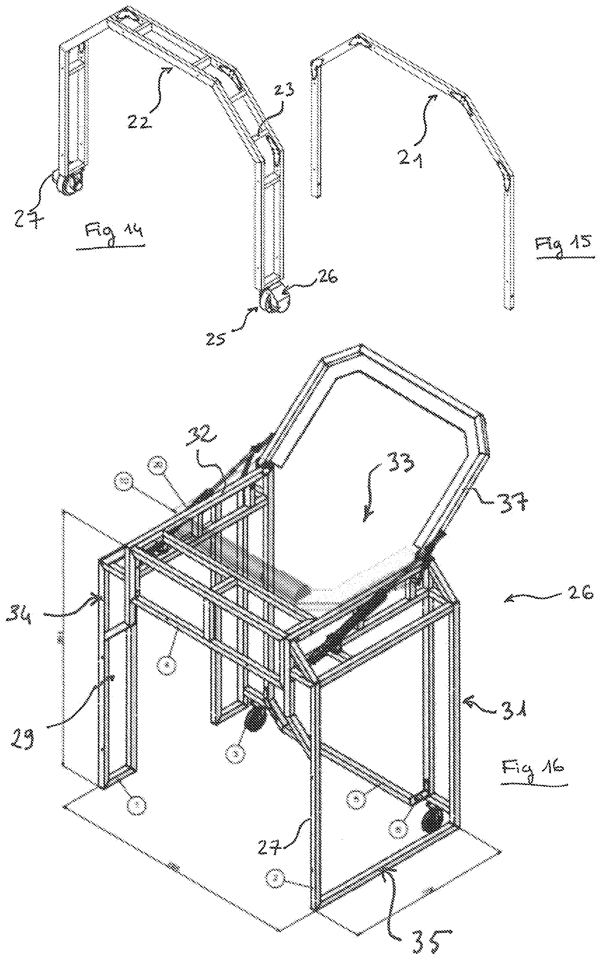

Comme visible sur la figure 6, aux deux extrémités de cette répétition de motifs, se trouvent disposés deux modules d'interface verticaux 21 (mieux visibles sur la figure 15) qui viennent se fixer chacun sur les deux charnières inférieures d'extrémité. Chaque module d'interface est obtenu par l'assemblage rigide de différents segments formant ensemble un profil en forme de U, identique à celui formé par un segment supérieur 11 et les deux segments latéraux 12a s'étendant de part et d'autre de ce segment supérieur 11, de sorte que ces segments 10, 12a viennent se plaquer contre le module d'interface 21 lorsque le tunnel est contracté.

D'un côté de l'un des deux modules d'interface, vient se positionner un module de motorisation 22 représenté sur les figures 8 et 14 notamment, qui présente, vu de face, le même profil que le module d'interface 21, mais est obtenu par l'assemblage rigide de deux ensembles de segments en forme de U reliés l'un à l'autre par des petits segments transversaux 23, améliorant la rigidité de l'ensemble. Deux roulements à moteur 25 sont prévus respectivement à l'extrémité inférieure gauche et à l'extrémité inférieure droite de cette double armature, avec des moteurs 25 suffisamment puissants pour pouvoir entraîner la succession de « motifs » entre la configuration contractée et déployée.

Ces deux moteurs agissent tous deux et de façon synchronisée pour le déploiement de la succession de motifs depuis la configuration contractée vers la configuration déployée, le module d'interface opposé aux moteurs étant fixe, les moteurs tirant ensemble et de façon équilibrée l'autre module d'interface afin d'écarter les uns des autres et de façon progressive, les segments latéraux.

Avantageusement, pour former une portion courbe de tunnel, il peut être prévu que certains « motifs » proches du module de motorisation soient maintenus plaqués les uns contre les autres par des moyens appropriés tels que deux sangles, disposées de part et d'autre du segment supérieur, et que les deux moteurs 26, 27 puissent être activés indépendamment l'un de l'autre. Ainsi, une fois que les motifs restants sont déployés, il sera possible de définir une portion courbe en déliant l'une des sangles pour autoriser l'écartement mutuel des segments latéraux disposés de ce côté du segment supérieur 11, et en activant le moteur disposé du même côté, alors que l'autre sangle verrouille les uns contre les autres les segments latéraux opposés et que le moteur correspondant n'est pas activé. On définit ainsi une portion courbe gauche ou une portion courbe droite (voir figures 5 et 6). Cela implique de pouvoir gérer la vitesse de chaque moteur de 0 à 100% de la vitesse maxi.

Ces deux moteurs des roulements gauche et droit (roues motorisées) sont avantageusement radiocommandés ou télécommandés de façon à commander à distance le déploiement/repliement du tunnel ou la définition d'une courbe gauche ou droite.

En outre, la gestion de l'actionnement de ces moteurs indépendants est suffisamment précise pour assurer un accostage du module de motorisation contre une partie de tête 26 du tunnel assurant la liaison avec l'entrée de l'appareil aérien, et ce, même lorsque cette partie de tête et le corps du tunnel ne sont pas dans un alignement optimal.

La structure rigide ci-dessus décrite est équipée d'une enveloppe souple 41 définissant dans la configuration déployée de la structure, un dôme d'isolement et de protection des passagers et, qui s'étend, dans la configuration contractée de la structure, en dehors de deux segments adjacents rabattus l'un sur l'autre pour les mêmes besoins de compaction.

Cette enveloppe souple 41 est constituée d'une succession de petits pans 42 illustrés sur la figure 17, en alternance avec de grands pans 43 visibles sur la figure 18.

Chaque petit pan 42 définit un contour sensiblement triangulaire dont les deux bords latéraux 44 sont respectivement fixés aux segments latéraux adjacents 12a, 12b issus d'une même charnière supérieure, le bord restant 46 constituant un bord libre pour le petit pan 42.

Chaque grand pan 43 s'étend entre deux segments supérieurs adjacents 11, deux segments latéraux issus de la même charnière inférieure 13 de chaque côté des segments supérieurs, les bords latéraux de chaque grand pan étant respectivement fixés aux deux segments supérieurs 10, aux quatre segments latéraux s'étendant à partir de ces segments supérieurs.

Cette fixation des petits et grands pans par leurs bords latéraux sur les bords latéraux adjacents de deux segments consécutifs du tunnel, et leur souplesse, leur permet de s'étendre non pas entre ces segments consécutifs comme un accordéon, lorsque le tunnel est replié, mais au contraire, leur corps s'étend en dehors de deux segments consécutifs et permet à ceux ci d'être plaqués l'un contre l'autre, et ainsi un repliement très compact du tunnel. Avantageusement, il pourra être prévu sur chaque pan, petit ou grand, des lignes de pliage préférentielles lui permettant de ne pas s'interposer latéralement « en accordéon » entre deux segments consécutifs du tunnel mais en dehors de ces segments qui peuvent alors être plaqués l'un contre l'autre.

Chaque grand pan 43 et chaque petit pan 42 est formé d'un morceau de toile par exemple de type bâche PVC imperméable et/ou opaque et peut être pourvu de parties transparentes formant hublot.

Les bords latéraux des petits et grands pans de l'enveloppe souple sont solidarisés aux segments latéraux adjacents de la structure rigide par tout moyen approprié.

On peut par exemple prévoir que ces bords soient pourvus de tiges s'insérant dans des glissières correspondantes de préférence en aluminium et rivetées le long des segments latéraux de la structure

Ces glissières sont faites à partir d'un profilé aluminium standard qui est peu onéreux et rapidement approvisionnable. C'est une solution simple qui a le mérite d'être fiable et robuste quant à la tenue de la bâche sur la structure aluminium du tunnel. De ce fait chaque tronçon de tunnel possède un tronçon de bâche qui lui est propre.

Chaque panneau (petit ou grand) devient alors standard. Cela permet d'avoir des composants standards qui peuvent être produits à l'avance. La fabrication d'un tunnel devient alors le montage de ces composants standards, ce qui diminue notablement le délai de fabrication et donc le délai de livraison.

Dans l'exemple illustré, les bords latéraux des grands panneaux, qui longent les segments supérieurs 11 sont solidarisés aux bords latéraux des grands pans adjacents et non auxdits segments supérieurs 11 pour permettre le repliement de la toile en dehors des segments plaqués les uns contre les autres.

L'enveloppe souple ainsi constituée par l'assemblage de ces grands et petits pans, peut être pourvue de matériaux de propriétés différentes : on peut prévoir que la partie supérieure de la toile soit constituée par un matériau phosphorescent, que des parties formant alors hublots soient constituées d'un matériau translucide et prévus sur la partie latérale, le reste de la toile pouvant être constitué d'un matériau opaque, par exemple blanc.

Ces matériaux différents participent à considérablement améliorer le sentiment d'espace. Les hublots en PVC translucide ainsi qu'une partie supérieure d'enveloppe souple phosphorescente qui délivre une lumière supplémentaire très douce, permettent d'améliorer le sentiment de sécurité des passagers empruntant ce tunnel, et notamment la visibilité.

Une structure rigide de ce type pour un même matériau constitutif, possède un poids linéaire moitié moindre que le poids linéaire du tunnel à structure en croisillons décrit dans l'antériorité précitée FR 2 667 045 (environ 30 kg.m⁻¹).

Ce gain en poids permet d'ajouter des masses en partie basse pour abaisser le centre de gravité de la structure et diminuer le risque de basculement en cas de vent fort.

Ainsi, pour améliorer la stabilité de ce tunnel, et éviter tout basculement dû au vent, tout en le dotant d'un poids raisonnable, il peut être prévu que les segments latéraux soient lestés en partie basse pour abaisser le centre de gravité de la structure. Par exemple, lorsque les segments sont constitués de tubes creux, les lests pourront être constitués de morceaux d'une matière dense (par exemple des rondelles d'acier) insérées dans la cavité du tube inférieur, et qui se retrouvent par gravité à l'extrémité inférieure ce tube. Cette précaution prise, les segments pourront être constitués d'un matériau léger tel que de l'aluminium.

En cas de vent il existe encore un risque de faseyement ou de battement du bas de la toile. Pour y pallier, on prévoit entre deux segments en aluminium, une chaîne reposant sur la toile côté extérieur du tunnel et qui sert de butée de déploiement maximum de la toile, pour chaque tronçon, de façon à retenir les mouvements de la toile vers l'intérieur du tunnel en cas de vent.

La structure déployable décrite ci-dessus coopère avec une partie de tête 26 mise en évidence sur la figure 7, assurant la connexion avec la porte d'accès de l'avion.

Cette partie de tête 26 comprend un corps principal rigide de forme sensiblement parallélépipédique ouvert en partie basse et obtenu par l'assemblage rigide de différents profilés.

La partie arrière forme un cadre en forme de U inversé 29 dont les deux branches latérales et la branche supérieure sont fixées aux parties en regard du module de motorisation 22.

La partie avant 31 et la partie supérieure 32 sont également des cadres en forme de U avec leurs ouvertures coïncidant l'une l'autre de façon à définir ensemble une grande ouverture 33 destinée à être dirigée vers l'avion.

L'une des parties latérales 34 est un cadre en forme de U inversé définissant une ouverture d'accès à l'intérieur de la partie de tête, la deuxième est constituée d'un cadre rectangulaire.

Un cadre rapporté 37 en forme de U et dont l'ouverture coïncide avec la grande ouverture 33, est monté mobile sur la partie supérieure 32, entre position rabattue sur cette partie supérieure 32 et une position inclinée dans laquelle il fait un angle obtus avec cette partie supérieure 32 de façon à venir s'appuyer contre la coque de l'avion, au-dessus de la porte d'accès des passagers (voir figure 7).

Une bâche non représentée dont les bords seraient solidarisés aux différentes branches de U du cadre mobile 37 et du cadre supérieur, est prévue pour abriter les passagers passant du tunnel à l'avion. Elle se replie contre la partie supérieure 32 lorsque le cadre mobile 37 occupe la position rabattue, et se déploie entre ce cadre mobile 37 et la partie supérieure 32 lorsque le cadre mobile 37 occupe sa position inclinée. Comme visible sur cette même figure 7, un escalier d'accès à l'avion peut être disposé à l'intérieur du corps principal de la partie de tête.

Le tunnel tel que décrit ci-dessus peut être considéré comme pouvant résister à un vent de 40 km/h = 22 noeuds de vent ou force 6 sur l'échelle de Beaufort (Vent frais)

En effet, le calcul de l'effort horizontal du au vent peut être effectué à l'aide de la formule de la charge au vent : F = 0.64.V².C.Ap
Avec V= Vitesse du vent en m/s
C =Facteur de forme (Cx) =1 pour notre application
Ap = Surface apparente = Surface droite constituée des morceaux de bâche verticaux (les petits pans et les portions triangulaires des grands pans) et de la projection verticale des morceaux de bâche inclinés (les portions trapézoïdales des grands pans).

En considérant que :
- pour un élément de tunnel déployé et se rapportant à deux roues d'avance, la surface est de 5,67 m²
- la masse d'un élément de tunnel se rapportant à deux roues d'avance est de 63kg et que
- les roues sont en caoutchouc naturel. Leur coefficient d'adhésion avec de l'asphalte ou du béton sur un sol mouillé est de 0.75, ce qui implique un effort de 630 N . 0,6 = 472N pour partir en ripage sur un tronçon de tunnel.

Le tunnel décrit ci-dessus peut en variante, non pas s'étendre depuis la porte du terminal elle-même, mais d'un côté d'une allée de circulation sur laquelle débouche cette porte de terminal. Dans ce cas, un autre dispositif pourra assurer le passage des voyageurs entre la porte du terminal et l'entrée du tunnel sur la largeur de l'allée de circulation.

Cet autre dispositif pourra être rigide, ou déployable à la même façon que le tunnel ci-dessus décrit. Il pourra en outre être mobile le long de l'allée de circulation, pour pouvoir être stocké dans une place non gênante en dehors de l'allée.

## Revendications

1. Dispositif déployable pour couvrir le cheminement des passagers entre un bâtiment terminal et un moyen de transport par exemple aérien, comprenant :
- une structure rigide définie par des cadres articulés deux à deux en alternance par un segment commun (11) et par les extrémités (13) de segments latéraux (12a, 12b) s'étendant à partir d'un segment commun, entre une configuration contractée dans laquelle les cadres sont plaqués les uns contre les autres et une configuration déployée dans laquelle ces cadres font un angle les uns vis-à-vis des autres, et
- une enveloppe souple (41) s'étendant, dans la configuration déployée de la structure, entre les cadres écartés de façon à définir un dôme d'isolement et de protection des passagers, et, dans la configuration contractée de la structure, en dehors de deux cadres consécutifs plaqués l'un sur l'autre de façon à garantir la compacité du dispositif dans la configuration contractée, **caractérisé en ce que** l'enveloppe souple comprend de petits pans (42) définissant chacun un contour sensiblement triangulaire dont les deux bords latéraux sont respectivement fixés aux segments latéraux de deux cadres s'étendant à partir d'un même côté commun, le bord restant constituant un bord libre pour le petit pan.

2. Dispositif selon la revendication 1, caractérisé en que l'enveloppe souple comprend de grands pans (43) s'étendant entre deux cadres articulés deux à deux par les extrémités de leurs segments latéraux, les bords latéraux de chaque grand pan (43) étant respectivement fixés aux différents segments des deux cadres.

3. Dispositif selon la revendication 1 ou 2, **caractérisé en ce que** chaque segment latéral (12a, 12b) comprend un lest en partie inférieure permettant d'abaisser le centre de gravité du dispositif.

4. Dispositif selon l'une des revendications précédentes, **caractérisé en ce que** chaque segment latéral comprend deux portions (47, 48) coudées l'une par rapport à l'autre, la portion reliée à une charnière supérieure définissant avec le segment supérieur un angle obtus minimisant la prise au vent.

5. Dispositif selon l'une des revendications précédentes, **caractérisé en ce que** les extrémités articulées des segments latéraux (12a, 12b) sont montées sur des roulements (14) permettant le déplacement de la structure entre la configuration déployée et la configuration contractée.

6. Dispositif selon la revendication 5, **caractérisé en ce que** le déplacement des roulements (14) est motorisé au niveau d'un cadre d'extrémité.

7. Dispositif selon l'une des revendications précédentes, **caractérisé en ce que** la structure rigide comprend une partie fixe (21) destinée à être solidarisée avec le sol à proximité du bâtiment terminal, une partie de corps sensiblement rectiligne de cheminement des passagers, et une extrémité libre (2) susceptible de se courber pour être montée sur une entrée d'un moyen de transport perpendiculaire au bâtiment terminal.

8. Dispositif selon la revendication 7, **caractérisé en ce que** l'extrémité du tunnel susceptible de se courber comprend des moyens de maintien plaqués les uns contre les autres, d'un certain nombre de cadres de la structure, et disposés de part et d'autre de la structure, en étant amoviblement fixés auxdits cadres, les moyens gauche de maintien, et les moyens droit de maintien pouvant être utilisés ensemble ou indépendamment l'un de l'autre de façon à permettre à l'extrémité du tunnel d'adopter une configuration rectiligne, courbée droite ou courbée gauche

9. Dispositif selon l'une quelconque des revendications précédentes en combinaison à la revendication 2, **caractérisé en ce que** chaque grand pan (43) et/ou chaque petit pan (42) est formé d'un morceau de toile par exemple de type bâche PVC, imperméable et/ou opaque.

10. Système de dispositifs pour couvrir le cheminement des passagers entre un bâtiment terminal et un moyen de transport par exemple aérien, comprenant :
un premier dispositif pour couvrir le cheminement des passagers depuis une sortie du bâtiment terminal située d'un côté d'une allée de circulation, jusqu'à l'autre côté de l'allée de circulation
un deuxième dispositif de cheminement des passagers depuis l'autre côté de l'allée de circulation et l'entrée du moyen de transport, et qui est conforme à l'une quelconque des revendications 1 à 9.

11. Système selon la revendication 10, **caractérisé en ce que** le premier dispositif est rigide ou déployable, et mobile dans l'allée de circulation.

## Patentansprüche

1. Ausfahrbare Vorrichtung, die zur Überdachung der Wegstrecke bestimmt ist, welche Passagiere zwischen einem Abfertigungsgebäude und einem Transportmittel, beispielsweise einem Luftfahrzeug, zurücklegen, und die Folgendes umfasst:
- eine steife Struktur, die von Rahmenelementen begrenzt ist, welche abwechselnd über ein gemeinsames Segment (11) und über die Enden (13) von seitlichen Segmenten (12a, 12b) paarweise aneinander angelenkt sind, wobei sie sich ausgehend von einem gemeinsamen Segment zwischen einer zusammengezogenen Konfiguration, in welcher die Rahmenelemente aneinander anliegen, und einer ausgefahrenen Konfiguration, in welcher Rahmenelemente jeweils im Winkel voneinander beabstandet sind, erstrecken, und
- eine nachgiebige Hülle (41), die sich in der ausgefahrenen Konfiguration der Struktur derart zwischen den beabstandeten Rahmenelementen erstreckt, dass sie eine Kuppel zur Isolierung und zum Schutz der Passagiere bildet, und die sich in der zusammengezogenen Konfiguration außerhalb zweier aufeinanderfolgender Rahmenelemente, die aneinander anliegen, derart erstreckt, dass die Kompaktheit der Vorrichtung in der zusammengezogenen Konfiguration sichergestellt ist,
**dadurch gekennzeichnet, dass** die nachgiebige Hülle kleine Flächen (42) umfasst, die jeweils eine im Wesentlichen dreieckige Außenform festlegen, wobei die beiden seitlichen Randstücke derselben jeweils an den seitlichen Segmenten der beiden Rahmenelemente befestigt sind, welche sich ausgehend ein- und derselben gemeinsamen Seite erstrecken, und das verbleibende Randstück ein freies Randstück für die kleine Fläche bildet.

2. Vorrichtung nach Anspruch 1, **dadurch gekennzeichnet, dass** die nachgiebige Hülle große Flächen (43) umfasst, die sich zwischen zwei Rahmenelementen erstrecken, welche über die Enden ihrer seitlichen Segmente paarweise aneinander angelenkt sind, wobei die seitlichen Randstücke jeder der großen Flächen (43) jeweils an den verschiedenen Segmenten der beiden Rahmenelemente befestigt sind.

3. Vorrichtung nach Anspruch 1 oder 2, **dadurch gekennzeichnet, dass** jedes der seitlichen Segmente (12a, 12b) im unteren Abschnitt einen Ballastkörper umfasst, der es ermöglicht, den Schwerpunkt der Vorrichtung niedriger zu lagern.

4. Vorrichtung nach einem der vorhergehenden Ansprüche, **dadurch gekennzeichnet, dass** jedes der seitlichen Segmente zwei Teilbereiche (47, 48) umfasst, die zueinander abgewinkelt sind, wobei der Teilbereich, welcher mit einem oberen Scharnier verbunden ist, mit dem oberen Segment einen stumpfen Winkel einschließt, um die Windangriffsfläche so gering wie möglich zu halten.

5. Vorrichtung nach einem der vorhergehenden Ansprüche, **dadurch gekennzeichnet, dass** die angelenkten Enden der seitlichen Segmente (12a, 12b) auf Rollen (14) gelagert sind, die es ermöglichen, die Struktur zwischen der ausgefahrenen Konfiguration und der zusammengezogenen Konfiguration zu bewegen.

6. Vorrichtung nach Anspruch 5, **dadurch gekennzeichnet, dass** das Bewegung der Rollen (14) mittels eines Antriebs erfolgt, der sich im Bereich eines endständigen Rahmenelements befinden.

7. Vorrichtung nach einem der vorhergehenden Ansprüche, **dadurch gekennzeichnet, dass** die steife Struktur einen festen Abschnitt (21), der dazu bestimmt ist, in der Nähe des Abfertigungsgebäudes fest mit dem Boden verbunden zu werden, einen im wesentlichen geradlinigen Körperabschnitt, der die Wegstrecke für die Passagiere bildet, und ein freiliegendes Ende (2) umfasst, das gekrümmt werden kann, um an einen Eingang eines Transportmittels angebracht zu werden, welches rechtwinklig zum Abfertigungsgebäude ist.

8. Vorrichtung nach Anspruch 7, **dadurch gekennzeichnet, dass** das Ende des Tunnels, welches gekrümmt werden kann, Mittel umfasst, die dazu dienen, eine bestimmte Zahl von Rahmenelementen der Struktur aneinanderliegend zu halten, und die auf beiden Seiten der Struktur angeordnet sind, wobei sie lösbar an den Rahmenelementen befestigt sind, und wobei die linken Halteelemente und die rechten Halteelemente gemeinsam oder unabhängig voneinander derart verwendet werden können, dass das Ende des Tunnels eine geradlinige, nach rechts gekrümmte oder nach links gekrümmte Konfiguration annehmen kann.

9. Vorrichtung nach einem beliebigen der vorhergehenden Ansprüche in Kombination mit dem Anspruch 2, **dadurch gekennzeichnet, dass** jede der großen Flächen (43) und/oder jede der kleinen Flächen (42) aus einem undurchlässigen und/oder undurchsichtigen Stück Textilstoff gebildet ist, beispielsweise des Typs PVC-Plane.

10. System von Vorrichtungen, das zur Überdachung der Wegstrecke bestimmt ist, welche Passagiere zwischen einem Abfertigungsgebäude und einem Transportmittel, beispielsweise einem Luftfahrzeug, zurücklegen, und das Folgendes umfasst:
eine erste Vorrichtung, die zur Überdachung der Wegstrecke bestimmt ist, welche Passagiere von einem Ausgang des Abfertigungsgebäude, der sich auf einer Seite eines Verkehrswegs befindet, bis zur anderen Seite des Verkehrswegs zurücklegen
eine zweite Vorrichtung, mittels welcher Passagiere von der anderen Seite des Verkehrswegs zum Eingang des Transportmittels gelangen können und welche einem beliebigen der Ansprüche 1 bis 9 entspricht.

11. System nach Anspruch 10, **dadurch gekennzeichnet, dass** die erste Vorrichtung steif odr ausfahrbar ist, wobei sie in dem Verkehrsweg bewegt werden kann.

## Claims

1. A deployable device for covering the pathway for passengers between a terminal building and transport means, e.g. air transport means, the device comprising:
- a rigid structure defined by a frames hinged together in pairs and in alternation via a common segment (11) and via the ends (13) of side segments (12a, 12b) extending from a common segment, to go between a contracted configuration in which the frames are pressed together against one another, and a deployed position in which the frames form angles relative to one another; and
- a flexible covering (41) extending, when the structure is in the deployed configuration, between the spaced-apart frames in such a manner as to define a shelter for isolating and protecting the passengers, and, when the structure is in the contracted configuration, outside two consecutive pressed-together frames so as to guarantee compactness for the device in the contracted configuration, said device being **characterized in that** the flexible covering includes small panels (42), each of which defines a substantially triangular outline having its two side edges fastened to respective ones of the side segments of two frames extending from the same common side, the remaining edge constituting a free edge for the small panel.

2. A device according to claim 1, **characterized in that** the flexible covering includes large panels (43), each extending between two frames hinged together as a pair via the ends of their side segments, the side edges of each large panel (43) being fastened to respective ones of the different segments of the two frames.

3. A device according to claim 1 or claim 2, **characterized in that** each side segment (12a, 12b) includes ballast in its lower portion, making it possible to lower the center of gravity of the device.

4. A device according to any preceding claim, **characterized in that** each side segment comprises two portions (47, 48) extending at different angles to form a bend between them, the portion connected to a top hinge defining an obtuse angle with the top segment, thereby minimizing windage.

5. A device according to any preceding claim, **characterized in that** the hinged ends of the side segments (12a, 12b) are mounted on rolling members (14) enabling the structure to be moved between the deployed configuration and the contracted configuration.

6. A device according to claim 5, **characterized in that** the movement of the rolling members (14) is motor-driven at an end frame.

7. A device according to any preceding claim, **characterized in that** the rigid structure comprises a stationary portion (21) designed to be secured to the ground in the vicinity of the terminal building, a substantially rectilinear body forming a pathway for the passengers, and a free end (2) suitable for bending so as to be mounted onto an entrance to transport means perpendicular to the terminal building.

8. A device according to claim 7, **characterized in that** the end of the tunnel that is suitable for bending is provided with holding means for keeping a certain number of frames of the structure pressed together, which means are disposed on either side of the structure, while being removably fastened to said frames, it being possible for the left holding means and the right holding means to be used together or independently from each other in such a manner as to enable the end of the tunnel to take up a rectilinear configuration, a right bend configuration, or a left bend configuration.

9. A device according to any preceding claim in combination with claim 2, **characterized in that** each large panel (43) and/or each small panel (42) is formed of a piece of canvas, e.g. of the PVC tarpaulin type, that is weatherproof and/or opaque.

10. A system of devices for covering the pathway for passengers between a terminal building and transport means, e.g. air transport means, the system comprising:
a first device for covering the pathway for passengers from an exit from the terminal building, which exit is situated on one side of a walkway, to the other side of the walkway; and
a second device for covering the pathway for passengers from the other side of the walkway to the entrance to the transport means, the second device being a device according to any one of claims 1 to 9.

11. A system according to claim 10, **characterized in that** the first device is rigid or deployable, and can be moved along the walkway.
